# FASCICULE DE BREVET EUROPEEN

(11) **EP 2 719 904 B1**
(45) Date de publication et mention de la délivrance du brevet: **30.12.2015**
(21) Numéro de dépôt: 13188416.5
(22) Date de dépôt: 14.10.2013
(51) Int. Cl.: F16K 27/00, F15B 13/08

(54) **Distributeur électropneumatique**
Elektropneumatisches Steuerventil
Electropneumatic distributor

(30) Priorité: 15.10.2012 FR 1259795
(43) Date de publication de la demande: 16.04.2014
(73) Titulaire: Asco Joucomatic SA, 92500 Rueil Malmaison (FR)
(72) Inventeur: Nicolas, Dimitri, 28110 Luce (FR); Marc, Laurent, 28600 Luisant (FR); Schmidt, Michel, 28170 Chateauneuf en Thymerais (FR); Vandamme, Richard, 28300 Cintray (FR); Douël, Luc, 28630 Le Coudray (FR); Moreau, Pascal, 28630 Le Coudray (FR); Glandor, Olivier, 28000 Chartres (FR)
(74) Mandataire: Nony

(56) Documents cités:
- WO-A1-2006/103129
- WO-A1-2006/125732
- DE-A1- 19 619 968
- US-A- 5 152 322
- US-B1- 6 371 166

## Description

La présente invention concerne les dispositifs électropneumatiques et plus particulièrement ceux appelés distributeurs.

Un distributeur comporte classiquement une ou plusieurs électrovannes dites « pilotes » qui agissent différemment, selon leur état, sur un circuit pneumatique de commande d'une vanne multivoie. Cette dernière comporte classiquement un tiroir permettant d'établir différentes connexions pneumatiques de commande d'un ou plusieurs actionneurs pneumatiques, selon sa position. Plusieurs distributeurs sont habituellement montés, en fonction des besoins, dans une configuration dite « en îlot », côte à côte sur une embase qui comporte généralement une alimentation et un échappement pour le circuit pneumatique de pilotage de la vanne multivoie et diverses connexions avec le circuit pneumatique auquel celle-ci est reliée. L'embase peut encore comporter une alimentation électrique pour les électrovannes du distributeur.

Les électrovannes comportent chacune un organe d'actionnement, tel qu'une bobine, comportant des contacts d'alimentation électrique, reliés à un ou plusieurs connecteurs électriques ou câbles. Le distributeur peut notamment comporter un connecteur qui coopère avec un connecteur correspondant sur l'embase, l'alimentation étant qualifiée dans ce cas d'alimentation centralisée. En variante, le distributeur comporte un connecteur, par exemple en façade, sur lequel se fixe un câble, l'alimentation étant alors qualifiée d'individualisée.

Le distributeur électropneumatique comporte un circuit imprimé auquel sont reliées électriquement les électrovannes. Cette connexion peut s'effectuer au moyen d'un ou plusieurs connecteurs électriques, soudés sur le circuit imprimé et réalisant les contacts électriques par l'action d'éléments élastiques internes au connecteur. Ce type de connexion est décrit par exemple dans les publications FR 2 693 516 et WO 2008/000309. Un inconvénient de ce type de connexion est de nécessiter un alignement précis des pièces à connecter.

Une solution alternative offrant plus de liberté dimensionnelle réside dans l'utilisation d'un élément de connexion élastique entre le circuit imprimé et l'organe d'actionnement, réalisant la continuité électrique entre les deux, comme décrit notamment dans les publications EP 1 345 483 et EP 2 441 968. L'inconvénient de cette solution est la nécessité, pour garantir un contact de bonne qualité, d'exercer avec l'élément de connexion un effort important, ce qui est difficile à réaliser dans un encombrement limité. Par ailleurs, afin de garantir l'isolation électrique entre les différentes polarités, il est nécessaire d'avoir un élément élastique par connexion.

WO 2006/103129 A1 (D1), divulgue un dispositif de commande hydraulique pour l'automobile comportant des organes de commande et reliés par des pattes flexibles à des conducteurs reliés à des électrovannes.

Cette demande ne décrit pas de circuit imprimé avec des surfaces de contact ayant une liberté de déplacement relativement à des contacts reliés électriquement aux électrovannes.

US 5 152 322 divulgue un dispositif comportant des conducteurs électriques d'alimentation d'électrovannes qui comportent des pinces venant en prise sur des broches de contact des électrovannes.

WO 2006/125732 divulgue un dispositif dans lequel le contact électrique entre un circuit de commande et des électrovannes est assuré par des ressorts coniques électriquement conducteurs.

US 6 371 166 B décrit également un agencement comportant des ressorts coniques.

DE 16 19 968 A1 divulgue un dispositif dans lequel un circuit imprimé porte des broches qui viennent en appui avec des contacts électriques d'électrovannes.

L'invention vise à perfectionner encore les distributeurs électropneumatiques et notamment permettre une plus grande liberté dans le choix de l'agencement du distributeur électropneumatique, sans pour autant perdre en fiabilité ou accroître outre mesure le coût du distributeur.

L'invention a ainsi pour objet, selon un premier de ses aspects, un distributeur électropneumatique comportant un organe d'actionnement, des contacts reliés électriquement à cet organe d'actionnement, un circuit imprimé comportant des surfaces de contact ayant une liberté de déplacement relativement aux contacts reliés électriquement à l'organe d'actionnement, les contacts reliés électriquement à l'organe d'actionnement et les surfaces de contact du circuit imprimé étant sollicités par rappel élastique en déplacement les uns relativement aux autres dans le sens de l'établissement d'une connexion électrique entre eux.

Le distributeur peut comporter deux électrovannes assurant un fonctionnement bistable et les deux organes d'actionnement associés.

Grâce à l'invention, il est possible de réaliser un distributeur électropneumatique d'encombrement réduit avec une bonne fiabilité du contact électrique d'alimentation du ou des organes d'actionnement.

L'invention permet de déporter la fonction élastique en dehors de la zone de connexion électrique avec l'organe d'actionnement, ce qui offre une plus grande liberté dans le choix de l'agencement des différents composants du distributeur électropneumatique.

Le distributeur comporte avantageusement, comme précisé plus loin, des éléments de contact qui s'interposent entre les contacts reliés électriquement à l'organe d'actionnement et les surfaces de contact du circuit imprimé.

Une manière préférée d'obtenir la sollicitation élastique conduisant à l'établissement des contacts est de solliciter en déplacement et/ou déformation le circuit imprimé à l'aide d'un organe de rappel élastique au moins.

Le circuit imprimé peut être souple au moins dans la région des surfaces de contact, étant de préférence entièrement souple.

La souplesse du circuit imprimé peut provenir de la nature du substrat isolant, par exemple en polyimide (par exemple KAPTON) ou en PET ou PEN ou verre epoxy mince flexibilisé et/ou de son épaisseur, et/ou de la présence de découpes. Lorsque le circuit imprimé est souple, son épaisseur est par exemple inférieure ou égale à 250 µm pour du simple face, cette épaisseur étant mesurée avant soudure des composants.

En présence de découpes sur le circuit imprimé, celles-ci se présentent par exemple sous la forme de fentes définissant des pattes flexibles sur le circuit imprimé, chaque patte portant une surface de contact. Deux fentes adjacentes peuvent définir entre elles un pont de matière par lequel se raccordent deux portions opposées du circuit imprimé, ce pont de matière étant par exemple orienté parallèlement à l'axe longitudinal du circuit imprimé. Les fentes peuvent chacune présenter un coude dirigé vers l'extérieur.

Comme mentionné ci-dessus, le distributeur peut comporter au moins un organe de rappel élastique pour solliciter en déplacement, par rappel élastique, les surfaces de contact du circuit imprimé et les contacts reliés électriquement à l'organe d'actionnement, dans le sens de l'établissement d'une connexion électrique. Cet organe de rappel élastique peut comporter au moins une lame formant ressort, s'appliquant sur une face du circuit imprimé opposée à celle portant les surfaces de contact. Cette lame peut être métallique.

Le cas échéant, notamment en présence d'un circuit imprimé double face, l'organe de rappel élastique peut être isolant électriquement, par exemple grâce à la présence d'un revêtement isolant, au niveau de ses zones d'appui sur le circuit imprimé, ou en variante grâce à un isolant électrique interposé entre l'organe de rappel élastique et le circuit imprimé si l'organe de rappel est métallique et non revêtu d'un isolant.

Dans une variante, le circuit imprimé comporte des pattes portant les surfaces de contact, qui assurent à elles seules ledit rappel élastique ; dans ce cas, la présence de l'organe de rappel élastique précité n'est pas nécessaire.

Le circuit imprimé peut être situé entre l'organe de rappel élastique et les contacts reliés électriquement à l'organe d'actionnement.

Les surfaces de contact du circuit imprimé sont de préférence des pistes du circuit imprimé ; ce dernier peut être simple face, auquel cas les pistes sont tournées vers les électrovannes.

Le distributeur peut comporter un bloc pilote logeant le ou les organes d'actionnement et un capot fixé sur le corps du distributeur et recouvrant ce bloc pilote, l'organe de rappel élastique s'interposant entre le circuit imprimé et le capot. L'organe de rappel élastique peut être fixé sur le capot.

Le distributeur peut comporter un joint d'étanchéité entre le capot et le corps du distributeur.

Le distributeur peut comporter une pluralité d'organes d'actionnement et le rappel élastique, pour assurer la connexion électrique de chacun des organes d'actionnement de ladite pluralité, peut être assuré par un même organe de rappel élastique. Cela permet de simplifier la structure du distributeur.

Les éléments de contact précités, qui relient les surfaces de contact du circuit imprimé et les contacts reliés à l'organe d'actionnement sont de préférence rigides, étant par exemple sous forme de pions métalliques orientés perpendiculairement au circuit imprimé. Ces pions peuvent avoir des extrémités arrondies.

Les contacts reliés électriquement à l'organe d'actionnement sont de préférence fixes relativement à l'organe d'actionnement, étant par exemple sous forme de broches.

Les pions précités peuvent reposer directement contre les contacts reliés électriquement à l'organe d'actionnement. Le bloc pilote peut comporter un support en matière thermoplastique qui supporte les contacts reliés électriquement à chaque organe d'actionnement. Ce support comporte, dans un exemple de réalisation, deux logements recevant chacun une électrovanne, avec des passages pour les broches précitées. Les deux électrovannes peuvent être situées dans le prolongement l'une de l'autre. Le support peut également comporter des logements dans lesquels sont reçus les éléments de contact, notamment les pions précités.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 représente, de façon schématique, en perspective éclatée, un exemple de distributeur électropneumatique selon l'invention,
- la figure 2 représente un détail de la connexion électrique entre le circuit imprimé et les contacts de l'organe d'actionnement,
- la figure 3 est une coupe partielle et schématique du distributeur des figures 1 et 2, à l'état assemblé,
- la figure 4 est une vue similaire à la figure 2 selon un autre angle de vue,
- les figures 5 et 6 représentent isolément le support des électrovannes selon deux angles de vue différents,
- la figure 7 est une coupe longitudinale du support dans un plan médian, et
- la figure 8 représente une variante de réalisation du circuit imprimé.

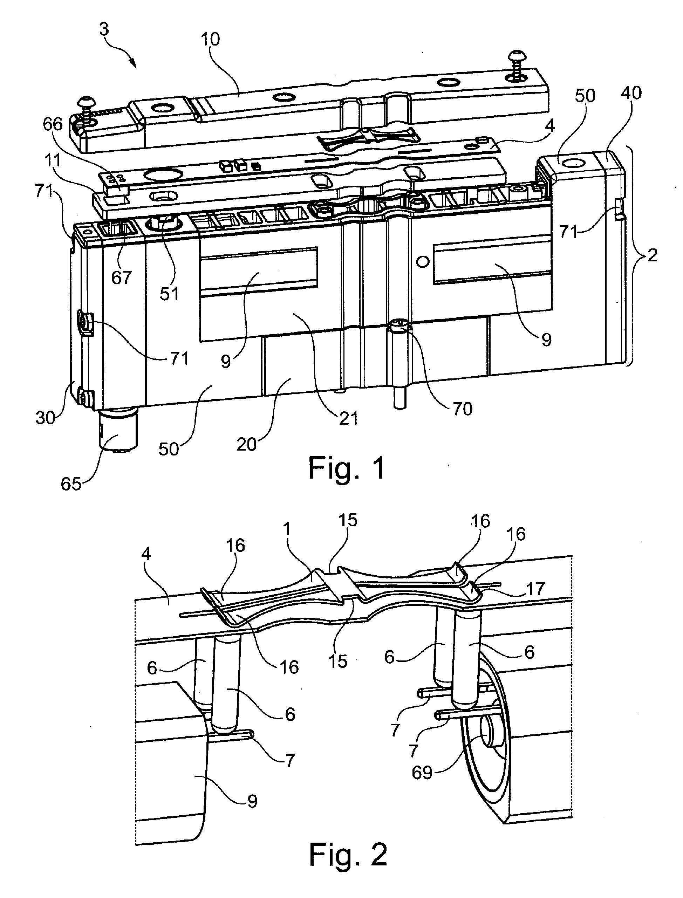

Le distributeur 3 selon l'invention, représenté à la figure 1, comporte un corps de distributeur 2, sur lequel est monté un capot 10.

Le corps de distributeur 2 peut comporter, comme illustré, plusieurs blocs assemblés, dont un bloc principal 20 de vanne multivoie, un bloc pilote 21, deux blocs d'extrémité 30 et 40 et deux blocs intermédiaires 50.

Le distributeur 3 peut être assemblé à une embase non représentée à l'aide de vis 70 venant en appui sur le bloc principal 20. Les blocs d'extrémité 30 et 40 sont assemblés sur les blocs pilote 21 et principal 20 par des vis 71 qui traversent les blocs intermédiaires 50.

Dans l'exemple illustré, le distributeur est prévu pour une alimentation électrique centralisée et comporte à cet effet un connecteur 65 sur sa face opposée au capot 10.

Le distributeur 3 comporte un circuit imprimé 4 et un joint d'étanchéité 11 qui s'interpose entre le capot 10 et le corps 2 du distributeur 3.

Dans l'exemple considéré, le distributeur 3 est bistable et comporte de façon conventionnelle deux pistons, non apparents, qui se situent dans les blocs intermédiaires 50 et se déplacent dans des chambres sous l'effet de l'envoi dans l'une ou l'autre de celles-ci d'air comprimé, grâce à des électrovannes 9 logées dans le bloc pilote 21. Selon la position d'un tiroir se déplaçant dans le bloc principal 20 avec les pistons, des communications pneumatiques différentes de la vanne multivoie sont établies, notamment avec l'embase sur laquelle est monté le distributeur, de façon connue en soi.

Chaque bloc intermédiaire 50 loge en outre, dans l'exemple considéré, un système de commande manuelle 51 qui comporte une vanne permettant de court-circuiter l'action de l'électrovanne associée 9 pour effectuer un test ou lors d'une opération de maintenance. Dans l'exemple considéré, la commande de cette vanne s'effectue à travers le capot 10, en tournant un axe débouchant en façade, à l'aide d'un tournevis.

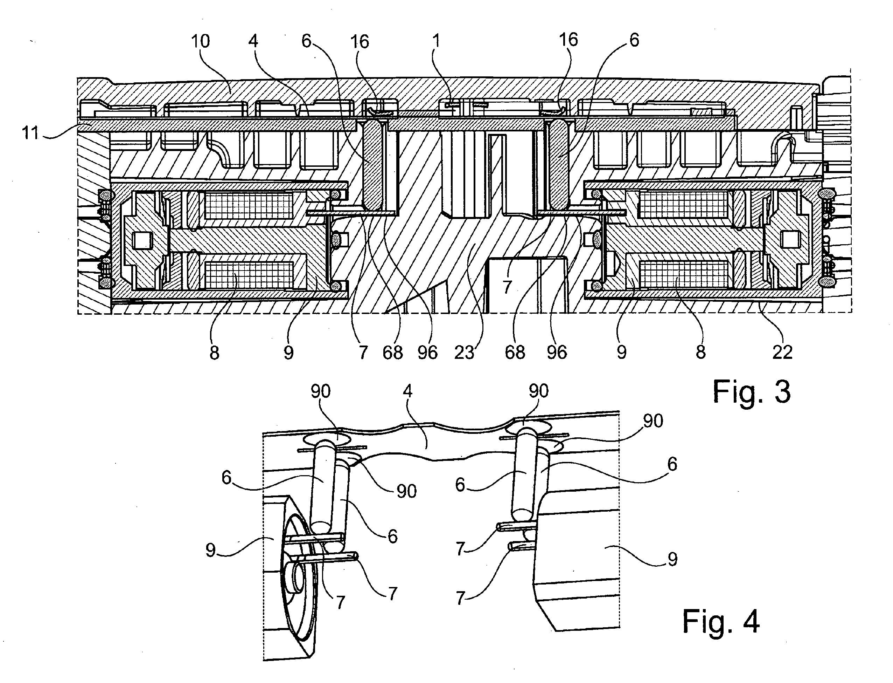

Le bloc pilote 21 comporte un support 23, représenté plus particulièrement sur les figures 3 et 5 à 7, qui définit deux logements 22 opposés pour recevoir chacun l'une des électrovannes 9.

Ce support 23 est de préférence réalisé par moulage d'une matière thermoplastique.

Les organes d'actionnement des électrovannes 9 sont constitués chacun par une bobine 8.

Chaque organe d'actionnement 8 comporte des contacts électriques 7 sous forme de broches, qui servent à son alimentation.

Dans l'exemple considéré, le circuit imprimé 4 est souple et présente des surfaces de contact 90 sur sa face opposée au capot 10, contre lesquelles viennent en appui des éléments de contact 6, lesquels se présentent sous forme de pions réalisés dans un métal conducteur. Ces éléments de contact 6 reposent sur les contacts 7 à leurs extrémités opposées au circuit imprimé 4. La longueur des éléments de contact 6 est par exemple comprise entre 7 et 11 mm et leur diamètre entre 1 et 3 mm. Les éléments de contact 6 présentent de préférence des extrémités arrondies.

Les éléments de contact 6 sont reçus dans des logements 72 du support 23.

Dans l'exemple considéré, le support 23 comporte des passages 96 pour les contacts 7 et des parois 68 contre lesquelles peuvent reposer ceux-ci, sous l'effet de la poussée exercée sur eux par les éléments de contact 6.

Le circuit imprimé 4 est par exemple réalisé avec un substrat isolant en polyimide ou en un autre matériau souple.

Un organe de rappel élastique 1 est disposé entre le capot 10 et le circuit imprimé 4, de manière à appliquer une force sur ce dernier en direction des contacts 7, de façon à assurer l'établissement d'une connexion électrique entre les contacts 7, les éléments de contact 6 et les surfaces de contact 90 du circuit imprimé sur lesquelles viennent en appui les éléments de contact 6.

L'organe de rappel élastique 1 se présente avantageusement, comme illustré notamment à la figure 3, sous la forme d'une lame souple réalisée dans un matériau à mémoire de forme, qui s'interpose entre le couvercle 10 et le circuit imprimé 4. Cette lame souple peut présenter une forme générale incurvée concave vers le circuit imprimé 4, avec dans sa région médiane des reliefs 15 qui assurent sa fixation et son positionnement sur le capot 10, et de part et d'autre de la région médiane des bras 16 dont le bord libre 17 est redressé vers le capot 10. Les bras 16, en fléchissant, exercent une contrainte par déformation élastique sur le circuit imprimé 4, sensiblement à l'aplomb des éléments de contact 6.

On notera que dans l'exemple illustré, un même organe de rappel élastique 1 exerce une action de rappel sur les éléments de contact 6 associés à deux organes d'actionnement 8 différents.

Le circuit imprimé 4 est simple face, les surfaces de contact 90 sur lesquelles appuient les éléments de contact 6 étant définies par des pistes du circuit imprimé 4. Ce dernier peut comporter un connecteur 66 coopérant avec un connecteur complémentaire 67 du corps 2 du distributeur, relié au connecteur 65. Le connecteur 66 sert à l'alimentation des électrovannes 9. Bien entendu, l'alimentation électrique du circuit imprimé 4 pourrait s'effectuer autrement, notamment à l'aide d'un connecteur monté en façade.

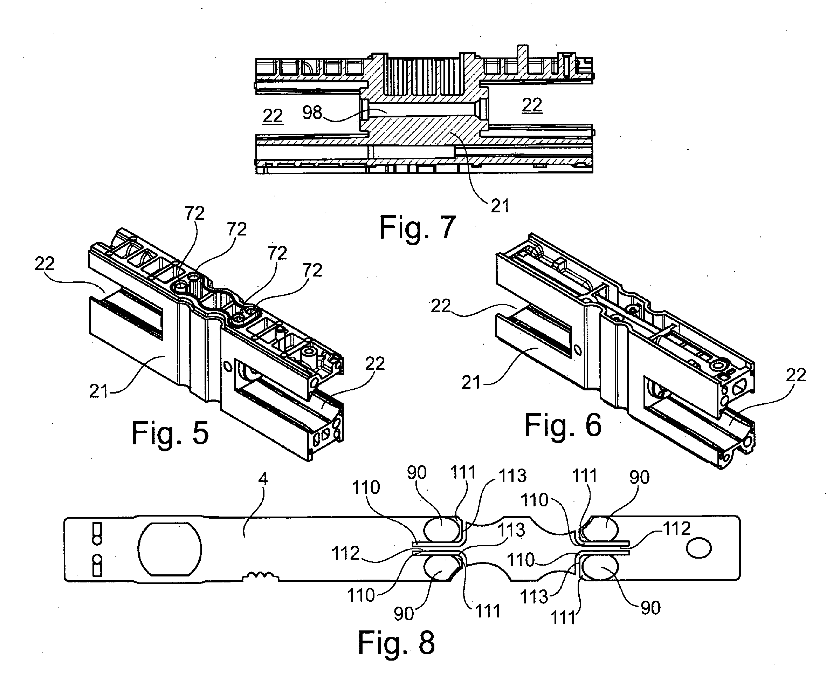

Le support 23 peut définir un canal 98 de circulation de l'air d'échappement des électrovannes 9, provenant d'orifices 69 de celles-ci, comme visible sur les figures 2 et 7.

Lors de l'assemblage du distributeur 3, les éléments de contact 6 sont mis en place dans leurs logements 72, puis le circuit imprimé 4 est positionné sur le corps 2 du distributeur et le capot 10 fixé sur celui-ci. La pose du capot 10 applique les bras 16 contre le circuit imprimé 4, qui fléchit et/ou se déplace et appuie à son tour sur les éléments 6, ce qui assure la continuité de la connexion électrique entre le circuit imprimé 4 et les contacts 7 des organes d'actionnement 8.

L'invention n'est pas limitée à l'exemple qui vient d'être décrit en référence aux figures 1 à 7.

Le distributeur décrit en référence aux figures est bistable, comportant deux électrovannes. On ne sort pas du cadre de la présente invention lorsque le distributeur est monostable, ne comportant qu'une seule électrovanne.

De préférence, la ou les électrovannes utilisées sont à électroaimant, et comportent une bobine en tant qu'organe d'actionnement. Toutefois, les électrovannes peuvent comporter un organe d'actionnement autre, par exemple de type piézoélectrique.

On peut modifier le corps du distributeur, notamment le bloc principal ou le bloc pilote, et réaliser le cas échéant le distributeur sans système de commande manuelle ou avec un système de commande manuelle autre que celui exemplifié.

Dans une variante de mise en oeuvre de l'invention, comme illustré à la figure 8 le circuit imprimé est réalisé avec des fentes 110 qui localement définissent des pattes flexibles 111 qui portent les surfaces de contact 90. L'organe de rappel élastique comporte par exemple des bras qui appuient sur ces pattes 111 de façon à déplacer les surfaces de contact 90 contre les éléments de contact 6. Des ponts 112 s'étendent entre deux fentes adjacentes 110. Ces ponts assurent la continuité mécanique et électrique du circuit imprimé. Dans l'exemple illustré, les fentes 110 présentent un coude 113 dirigé vers l'extérieur.

Dans une autre variante, non illustrée, le circuit imprimé 4 présente des pattes 111 comme dans l'exemple de la figure 8, mais le distributeur est dépourvu d'organe de rappel élastique 1. Les pattes 111 assurent à elles seules la sollicitation élastique nécessaire pour l'établissement de la connexion électrique, en appuyant sur les éléments de contact 6.

Bien que l'invention permette d'utiliser comme éléments de contacts 6 des pions rigides, ceux-ci peuvent être remplacés dans une variante par des ressorts hélicoïdaux conducteurs électriques. Cela permet de produire davantage d'efforts d'appui et d'avoir un contact de qualité encore meilleure.

L'expression « comportant un » doit être comprise comme étant synonyme de « comportant au moins un ».

## Revendications

1. Distributeur électropneumatique (3) comportant un organe d'actionnement (8), des contacts (7) reliés électriquement à cet organe d'actionnement (8), un circuit imprimé (4) comportant des surfaces de contact ayant une liberté de déplacement relativement aux contacts (7) reliés électriquement à l'organe d'actionnement (8), **caractérisé en ce que** les contacts (7) reliés électriquement à l'organe d'actionnement (8) et les surfaces de contact (90) du circuit imprimé (4) sont sollicités par rappel élastique en déplacement les uns relativement aux autres dans le sens de l'établissement d'une connexion électrique entre eux.

2. Distributeur selon la revendication 1, comportant des éléments de contact (6) interposés entre les contacts (7) reliés électriquement à l'organe d'actionnement (8) et les surfaces de contact (90) du circuit imprimé (4), ces éléments de contact (6) étant notamment sous la forme de pions orientés perpendiculaire au circuit imprimé (4).

3. Distributeur selon l'une des revendications précédentes, le circuit imprimé (4) étant souple, au moins dans la région des surfaces de contact (90).

4. Distributeur selon la revendication précédente, le circuit imprimé (4) étant entièrement souple, et notamment étant réalisé avec un substrat isolant en polyimide, PET, PEN ou verre epoxy flexibilisé.

5. Distributeur selon l'une des revendications précédentes, comportant au moins un organe de rappel élastique (1) pour solliciter par rappel élastique en rapprochement les surfaces de contact (90) du circuit imprimé (4) et les contacts (7) reliés électriquement à l'organe d'actionnement (8).

6. Distributeur selon la revendication 5, l'organe de rappel élastique (1) comportant une lame formant ressort, s'appliquant sur le circuit imprimé sur une face de celui-ci opposée à celle portant les surfaces de contact (90).

7. Distributeur selon la revendication précédente, le circuit imprimé (4) étant situé entre l'organe de rappel élastique (1) et les contacts (7) reliés électriquement à l'organe d'actionnement (8).

8. Distributeur selon l'une des trois revendications immédiatement précédentes, comportant un corps (2) logeant l'organe d'actionnement (8) et un capot (10) fixé sur le corps (2), l'organe de rappel élastique (1) s'interposant entre le circuit imprimé (4) et le capot (10).

9. Distributeur selon la revendication précédente, comportant un joint d'étanchéité (11) entre le capot (10) et le corps (2).

10. Distributeur selon l'une quelconque des revendications précédentes, l'organe d'actionnement (8) comportant un solénoïde.

11. Distributeur selon l'une quelconque des revendications précédentes, comportant une pluralité d'organes d'actionnement (8), notamment deux, et le rappel élastique pour assurer la connexion électrique de chacun des organes d'actionnement (8) de ladite pluralité étant assuré par un même organe de rappel élastique (1).

12. Distributeur selon la revendication 2, les éléments de contact (6) étant rigides.

13. Distributeur selon l'une quelconque des revendications 1 à 12, les contacts (7) reliés électriquement à l'organe d'actionnement (8) étant fixes relativement à l'organe d'actionnement (8), notamment reposant contre une paroi (68) d'un support (23) de l'organe d'actionnement (8).

14. Distributeur selon les revendications 2 et 13, le support (23) comportant des logements (72) pour les éléments de contact (6).

15. Distributeur selon l'une quelconque des revendications précédentes, le circuit imprimé (4) comportant des pattes (111) portant les surfaces de contact (90).

## Patentansprüche

1. Elektropneumatisches Wegeventil (3), umfassend ein Betätigungsteil (8), mit dem Betätigungsteil (8) elektrisch verbundene Kontakte (7), eine gedruckte Schaltung (4), die Kontaktoberflächen mit einer Verschiebungsfreiheit relativ zu den mit dem Betätigungsteil (8) elektrisch verbundenen Kontakte (7) aufweist, **gekennzeichnet dadurch, dass** die mit dem Betätigungsteil (8) elektrisch verbundenen Kontakte (7) und die Kontaktoberflächen (9) der gedruckten Schaltung (4) mittels elastischer Rückstellung gegeneinander verschoben in Richtung der Einreichung einer elektrischen Verbindung zwischen sich vorgespannt sind.

2. Wegeventil nach Anspruch 1, umfassend Kontaktelemente (6), die zwischen den mit dem Betätigungsteil (8) elektrisch verbundenen Kontakten (7) und den Kontaktoberflächen (90) der gedruckten Schaltung (4) angeordnet sind, wobei die Kontaktelemente (6) insbesondere in Form von senkrecht zur gedruckten Schaltung (4) ausgerichteten Stiften vorgesehen sind.

3. Wegeventil nach einem der vorhergehenden Ansprüche, wobei die gedruckte Schaltung (4) flexibel ist, zumindest im Bereich der Kontaktoberflächen (90).

4. Wegeventil nach dem vorhergehenden Anspruch, wobei die gedruckte Schaltung (4) vollständig flexibel ist und insbesondere mit einem isolierenden Substrat aus Polyimid, PET, PEN oder flexibilisiertem Epoxidglas ausgestattet ist.

5. Wegeventil nach einem der vorhergehenden Ansprüche, umfassend zumindest ein elastisches Rückstellteil (1) zum Vorspannen der Kontaktoberflächen (90) der gedruckten Schaltung (40) und der mit dem Betätigungsteil (8) elektrisch verbundenen Kontakte (7) nahe zueinander mittels elastischer Rückstellung.

6. Wegeventil nach Anspruch 5, wobei das elastische Rückstellteil (1) ein eine Feder bildendes Blatt umfasst, das auf der gedruckten Schaltung auf einer ihrer Flächen, die der gegenüber liegt, die die Kontaktflächen (90) trägt, angebracht ist.

7. Wegeventil nach dem vorhergehenden Anspruch, wobei die gedruckte Schaltung (4) zwischen dem elastischen Rückstellungsorgan (1) und den mit dem Betätigungsteil (8) elektrisch verbundenen Kontakten (7) angeordnet ist.

8. Wegeventil nach einem der drei unmittelbar vorhergehenden Ansprüche, umfassend einen Körper (2), der das Betätigungsteil (8) aufnimmt, und eine am Körper (2) befestigte Kappe, wobei das elastische Rückstellteil (1) zwischen der gedruckten Schaltung (4) und der Kappe (10) angeordnet ist.

9. Wegeventil nach dem vorhergehenden Anspruch, umfassend eine Dichtungsverbindung (11) zwischen der Kappe (10) und den Körpern (2).

10. Wegeventil nach einem der vorhergehenden Ansprüche, wobei das Betätigungsteil (8) eine Spule umfasst.

11. Wegeventil nach einem der vorhergehenden Ansprüche, umfassend mehrere Betätigungsteile (8), insbesondere zwei, umfasst, wobei die elastische Rückstellung zum Sichern der elektrischen Verbindung jedes der mehreren Betätigungsteile (8) durch dasselbe elastische Rückstellteil (1) gesichert ist.

12. Wegeventil nach Anspruch 2, wobei die Kontaktelemente (6) starr sind.

13. Wegeventil nach einem der Ansprüche 1 bis 12, wobei die mit dem Betätigungsteil (8) elektrisch verbundenen Kontakte (7) relativ zum Betätigungsteil (8) fixiert sind, insbesondere gegen eine Wand (68) einer Halterung (23) des Betätigungsteil (8) gelagert sind.

14. Wegeventil nach den Ansprüchen 2 und 13, wobei die Halterung (23) Aufnahmen (72) für die Kontaktelemente (6) umfasst.

15. Wegeventil nach einem der vorhergehenden Ansprüche, wobei die gedruckte Schaltung (4) Laschen (111) umfasst, die die Kontaktoberflächen (90) tragen.

## Claims

1. Electropneumatic dispenser (3) including an actuating member (8), contacts (7) electrically connected to this actuating member (8), and a printed circuit (4) having contact surfaces free to move relative to the contacts (7) electrically connected to the actuating member (8), **characterised in that** the contacts (7) electrically connected to the actuating member (8) and the contact surfaces (90) of the printed circuit (4) are biased by elastic return means to move relative to one another in the direction of making an electrical connection between them.

2. Dispenser according to claim 1, including contact elements (6) disposed between the contacts (7) electrically connected to the actuating member (8) and the contact surfaces (90) of the printed circuit (4), these contact elements (6) being in particular in the form of pins oriented perpendicularly to the printed circuit (4).

3. Dispenser according to either one of the preceding claims, the printed circuit (4) being flexible at least in the region of the contact surfaces (90).

4. Dispenser according to the preceding claim, the printed circuit (4) being entirely flexible, and in particular being made with an insulating polyimide, PET, PEN or flexible epoxy glass substrate.

5. Dispenser according to any one of the preceding claims, the elastic return means for biasing the contact surfaces (90) of the printed circuit (4) and the contacts (7) electrically connected to the actuating member (8) toward one another including at least one elastic return member (1).

6. Dispenser according to claim 5, the elastic return member (1) including a leaf spring pressing on the face of the printed circuit opposite that carrying the contact surfaces (90).

7. Dispenser according to the preceding claim, the printed circuit (4) being located between the elastic return member (1) and the contacts (7) electrically connected to the actuating member (8).

8. Dispenser according to any one of the three immediately preceding claims, including a body (2) accommodating the actuating member (8) and a cap (10) fixed on the body (2), the elastic return member (1) being disposed between the circuit board (4) and the cap (10).

9. Dispenser according to the preceding claim, including a seal (11) between the cap (10) and the body (2).

10. Dispenser according to any one of the preceding claims, the actuating member (8) including a solenoid.

11. Dispenser according to any one of the preceding claims, including a plurality of, in particular two, actuator members (8) and the elastic return means for making the electrical connection to each of the actuators (8) of said plurality being provided by the same elastic return member (1).

12. Dispenser according to claim 2, the contact elements (6) being rigid.

13. Dispenser according to any one of claims 1 to 12, the contacts (7) electrically connected to the actuating member (8) being fixed relative to the actuating member (8), in particular resting against a wall (68) of a support (23) of the actuating member (8).

14. Dispenser according to claims 2 and 13, the support (23) including housings (72) for the contact elements (6).

15. Dispenser according to any one of the preceding claims, the printed circuit (4) including lugs (111) carrying the contact surfaces (90).
